# EUROPEAN PATENT SPECIFICATION

(11) **EP 4 484 902 B1**
(45) Date of publication and mention of the grant of the patent: **01.04.2026**
(21) Application number: 23756191.5
(22) Date of filing: 02.02.2023
(51) Int. Cl.: G01F 1/66, G01F 15/00

(54) **ULTRASONIC FLOW METER**
ULTRASCHALL-DURCHFLUSSMESSER
DÉBITMÈTRE À ULTRASONS

(30) Priority: 21.02.2022 JP 2022024392
(43) Date of publication of application: 01.01.2025
(73) Proprietor: Panasonic Intellectual Property Management Co., Ltd., Kadoma-shi, Osaka 571-0057 (JP)
(72) Inventor: TAKAKURA, Yuya, Kadoma-shi, Osaka 571-0057 (JP); SATOU, Masato, Kadoma-shi, Osaka 571-0057 (JP); KONISHI, Ryohei, Kadoma-shi, Osaka 571-0057 (JP); MATSUDA, Masataka, Kadoma-shi, Osaka 571-0057 (JP); MIYOSHI, Asako, Kadoma-shi, Osaka 571-0057 (JP); NAWA, Motoyuki, Kadoma-shi, Osaka 571-0057 (JP)
(74) Representative: SSM Sandmair
(86) International application number: PCT/JP2023/003480
(87) International publication number: WO 2023/157664

(56) References cited:
- EP-B1- 1 612 520
- WO-A1-00/55581
- JP-A- 2007 147 562
- JP-A- 2021 018 129
- US-A1- 2021 270 649

## Description

### Technical Field

The present disclosure generally relates to an ultrasonic flowmeter, and more particularly relates to a configuration for an ultrasonic flowmeter for measuring a flow rate using an ultrasonic wave.

### Background Art

A flowmeter for measuring a flow rate with the internal space of a flow channel with a rectangular cross section divided into multiple layers has been known in the art as an ultrasonic flowmeter of this type (refer to, for example, Patent Literature 1).

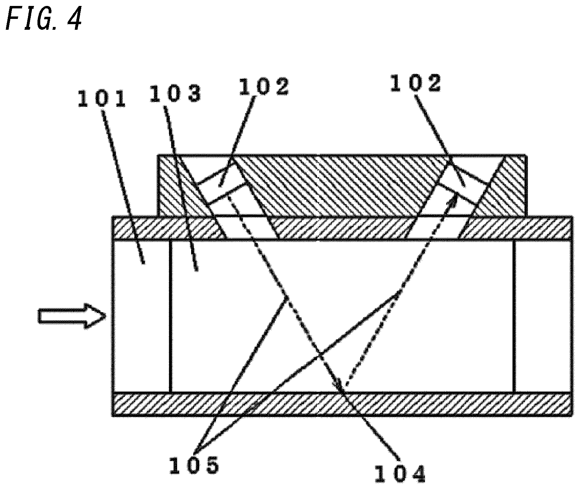

FIG. 4 illustrates a cross section of the measuring flow channel of the ultrasonic flowmeter disclosed in Patent Literature 1. In this ultrasonic flowmeter, an ultrasonic transducer 102 is provided as an upstream ultrasonic transducer on a shorter side of the measuring flow channel 101 with a rectangular cross section and another ultrasonic transducer 102 is provided as a downstream ultrasonic transducer on the shorter side of the measuring flow channel 101. In addition, at least one rectangular partition plate 103 is further arranged to divide the rectangular cross section into multiple layers along the shorter sides thereof. An ultrasonic wave transmitted forms a propagation path 105 between the ultrasonic transducers 102 via a reflective portion 104, thereby having the flow rate measured.

An ultrasonic flowmeter with this known configuration would allow a relatively large pressure drop to be caused by multiple partition plates, which is a problem with the known configuration. In addition, in a situation where a gas with moisture is a fluid under measurement, any condensation produced on the partition plates would either disturb the flow or cause resistance, thus affecting the accuracy of measurement, which is another problem with the known configuration. Patent Literature 2 discloses an ultrasonic flowmeter with profiled partition plates which promote a more stable flow and a decreased pressure loss.

### Citation List

### Patent Literature

Patent Literature 1: JP 2012-247299 A Patent Literature 2: US 2021/270649 A1

### Summary of Invention

In view of the foregoing background, it is therefore an object of the present disclosure to provide an ultrasonic flowmeter configured to cause an insignificant pressure drop and to be applicable to even a fluid having moisture which would produce condensation.

To overcome these problems with the know art, an ultrasonic flowmeter according to the present disclosure includes: a measuring flow channel having a rectangular cross section and configured to allow a fluid under measurement to flow therethrough; a partition plate arranged to divide the measuring flow channel along shorter sides thereof into multiple sections; a pair of ultrasonic transducers arranged on one of the shorter sides of the measuring flow channel to cause an ultrasonic wave to propagate across the measuring flow channel; a measuring circuit configured to perform an operation of having the ultrasonic wave transmitted from one of the pair of ultrasonic transducers and received at the other of the pair of ultrasonic transducers; and an arithmetic circuit configured to perform arithmetic processing on signals received at the pair of ultrasonic transducers. A downstream end of the partition plate is arranged to be parallel to a downstream ultrasonic wave propagation path in a region downstream of a centerline of the downstream ultrasonic wave propagation path.

In one embodiment, the downstream end of the partition plate is arranged to be parallel to the centerline of the downstream ultrasonic wave propagation path and to be located downstream of the centerline by at least one half of the width r of the ultrasonic transducers.

### Brief Description of Drawings

FIG. 1 is a cross-sectional view illustrating a configuration for an ultrasonic flowmeter according to a first embodiment of the present disclosure;
FIG. 2 is a cross-sectional view of a flow channel taken along the plane A-A shown in FIG. 1 according to the first embodiment of the present disclosure;
FIG. 3A is a graph showing a relationship between the flow rate and the pressure drop according to the first embodiment of the present disclosure;
FIG. 3B is a schematic cross-sectional view of a flow channel used in an experiment;
FIG. 3C is a schematic cross-sectional view of a flow channel used in an experiment; and
FIG. 4 is a cross-sectional view illustrating a configuration for a known ultrasonic flowmeter.

### Description of Embodiments

A first disclosure includes: a flow channel having a rectangular cross section and configured to allow a fluid under measurement to flow therethrough; a partition plate arranged to divide the flow channel along shorter sides thereof into multiple sections; a pair of ultrasonic transducers arranged on one of the shorter sides of the flow channel to cause an ultrasonic wave to propagate across the flow channel; a measuring circuit configured to perform an operation of having the ultrasonic wave transmitted from one of the pair of ultrasonic transducers and received at the other of the pair of ultrasonic transducers; and an arithmetic circuit configured to perform arithmetic processing on signals received at the pair of ultrasonic transducers. A downstream end of the partition plate is arranged to be parallel to a downstream ultrasonic wave propagation path in a region downstream of a centerline of the downstream ultrasonic wave propagation path. This contributes to reducing the pressure drop and the likelihood of water droplet adhesion on the partition plates.

According to a second disclosure, the downstream end of the partition plate is arranged to be parallel to the centerline of the downstream ultrasonic wave propagation path and to be located downstream of the centerline by at least one half of the width r of the ultrasonic transducers. This allows a more quantitative guideline to be obtained.

Embodiments of the present disclosure will now be described in detail with reference to the accompanying drawings as appropriate. Note that unnecessarily detailed description will be omitted. For example, detailed description of already well-known matters and redundant description of substantially the same configuration will be omitted. This is done to avoid making the following description overly redundant and thereby help one of ordinary skill in the art understand the present disclosure easily.

In addition, note that the accompanying drawings and the following description are provided by the applicant to help one of ordinary skill in the art understand the present disclosure fully and should not be construed as limiting the scope of the present disclosure, which is defined by the appended claims.

### (First embodiment)

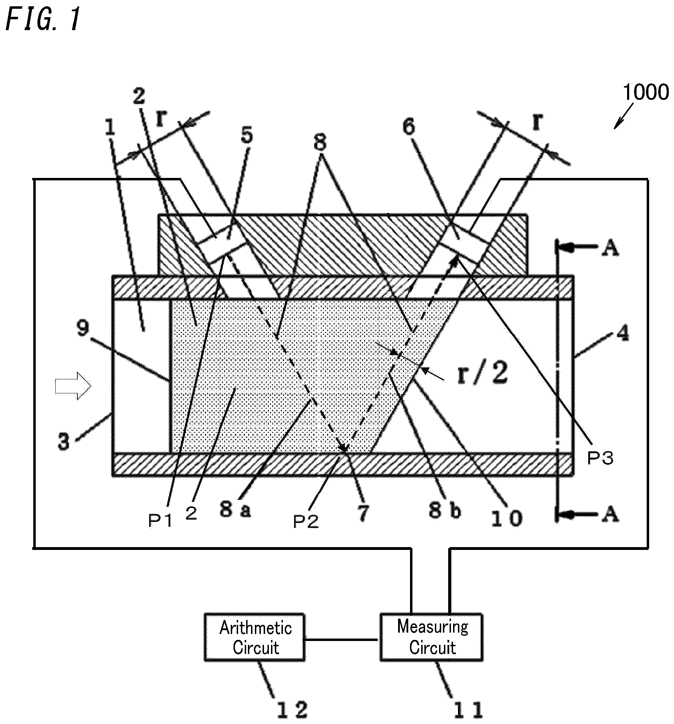

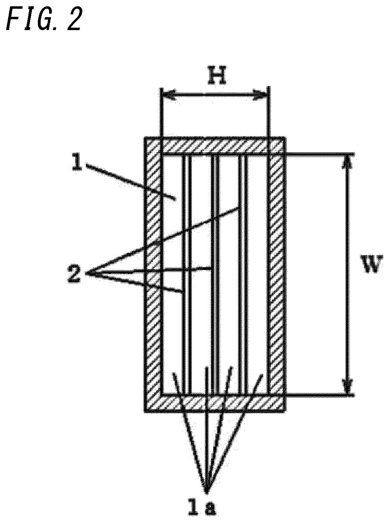

A first embodiment will be described with reference to FIGS. 1 and 2. FIG. 1 is a cross-sectional view illustrating a configuration for an ultrasonic flowmeter 1000 according to a first embodiment of the present disclosure. FIG. 2 is a cross-sectional view of the ultrasonic flowmeter 1000 taken along the plane A-A shown in FIG. 1 according to the first embodiment of the present disclosure.

In FIGS. 1 and 2, a measuring flow channel 1 having a rectangular cross section and configured to allow a fluid under measurement to flow in the direction indicated by the open arrow has a rectangular cross section, of which the longer sides have a width W, and the shorter sides have a height H. The internal space of the measuring flow channel 1 is evenly divided by a plurality of partition plates 2 along the height H of the shorter sides. This measuring flow channel 1 has an upstream inlet 3 at the upstream end thereof and a downstream outlet 4 at the downstream end thereof.

In addition, an upstream ultrasonic transducer 5 and a downstream ultrasonic transducer 6 are arranged on one shorter side of the measuring flow channel 1 with the rectangular cross section, and a reflective surface 7 for reflecting the ultrasonic wave is provided for the opposing shorter side.

The pair of ultrasonic transducers 5, 6 have the same width r. That is to say, the pair of ultrasonic transducers 5, 6 are provided for the measuring flow channel 1 to form a pair of openings with the same width r for transmitting and receiving the ultrasonic wave.

Through this pair of ultrasonic transducers 5, 6 and a plurality of flow channels 1a which are divided into multiple layers, the ultrasonic wave forms a V-ultrasonic wave propagation path 8 indicated as a P1-P2-P3 path. Such a V-ultrasonic wave propagation path 8 may be divided into an upstream ultrasonic wave propagation path 8a (from P1 through P2) and a downstream ultrasonic wave propagation path 8b (from P2 through P3).

In FIG. 1, as each of the upstream ultrasonic wave propagation path 8a and the downstream ultrasonic wave propagation path 8b, the centerline of the ultrasonic wave with a high ultrasonic wave propagation intensity is illustrated as their representative. In this sense, the upstream ultrasonic wave propagation path 8a and the downstream ultrasonic wave propagation path 8b represent the respective centerlines of the upstream ultrasonic wave propagation path and the downstream ultrasonic wave propagation path.

An upstream end 9, which is an upstream end of the partition plate 2, is provided to be perpendicular to the flowing direction of the fluid under measurement as indicated by the open arrow. On the other hand, a downstream end 10, which is a downstream end of the partition plate 2, is provided to be substantially parallel to the downstream ultrasonic wave propagation path 8b in a region downstream of the downstream ultrasonic wave propagation path 8b and to be tilted with respect to the flowing direction of the fluid under measurement.

The pair of ultrasonic transducers 5, 6 that form the ultrasonic wave propagation path 8 are electrically connected to a measuring circuit 11. The measuring circuit 11 measures the propagation time of the ultrasonic wave between the ultrasonic transducers 5, 6 by changing the operation modes of the ultrasonic transducers 5, 6 from a transmission mode to a reception mode, and vice versa. An arithmetic circuit 12 electrically connected to the measuring circuit 11 receives a signal from the measuring circuit 11 to calculate the flow velocity and flow rate of the fluid.

Furthermore, the downstream end 10 of the partition plate 2 is substantially parallel to the downstream ultrasonic wave propagation path 8b. The downstream end 10 of the partition plate 2 is arranged to be located downstream of the downstream ultrasonic wave propagation path 8b by at least one half of the width r of the ultrasonic transducer 6, thereby enabling the ultrasonic wave propagating through the divided flow channels 1a to be measured.

Next, it will be described how the ultrasonic flowmeter 1000 according to the present disclosure operates.

The fluid under measurement flowing through the measuring flow channel 1 flows into the ultrasonic flowmeter 1000 through the upstream inlet 3 as indicated by the open arrow in FIG. 1, passes through the ultrasonic wave propagation path 8 formed in the V shape by the ultrasonic transducers 5, 6, and then flows out of the ultrasonic flowmeter 1000 through the downstream outlet 4 of the measuring flow channel 1.

With respect to this flow along the measuring flow channel 1, the pair of ultrasonic transducers 5, 6 measures, using the measuring circuit 11, a propagation time in a forward direction from the ultrasonic transducer 5 to the ultrasonic transducer 6 and a propagation time in the opposite direction, and the arithmetic circuit 12 calculates the flow velocity and flow rate by the known inverse transit time difference method.

The partition plate 2 provided to rectify and stabilize the flow while measuring this propagation time has its downstream end 10 cut off obliquely to the flowing direction. The downstream end 10 is located downstream of the downstream ultrasonic wave propagation path 8b having a high ultrasonic wave propagation intensity, i.e., located downstream of the centerline of the downstream ultrasonic wave propagation path 8b by one half of the width r of the ultrasonic transducer 6. Thus, the downstream end 10 of the partition plate 2 does not affect the ultrasonic wave measurement significantly.

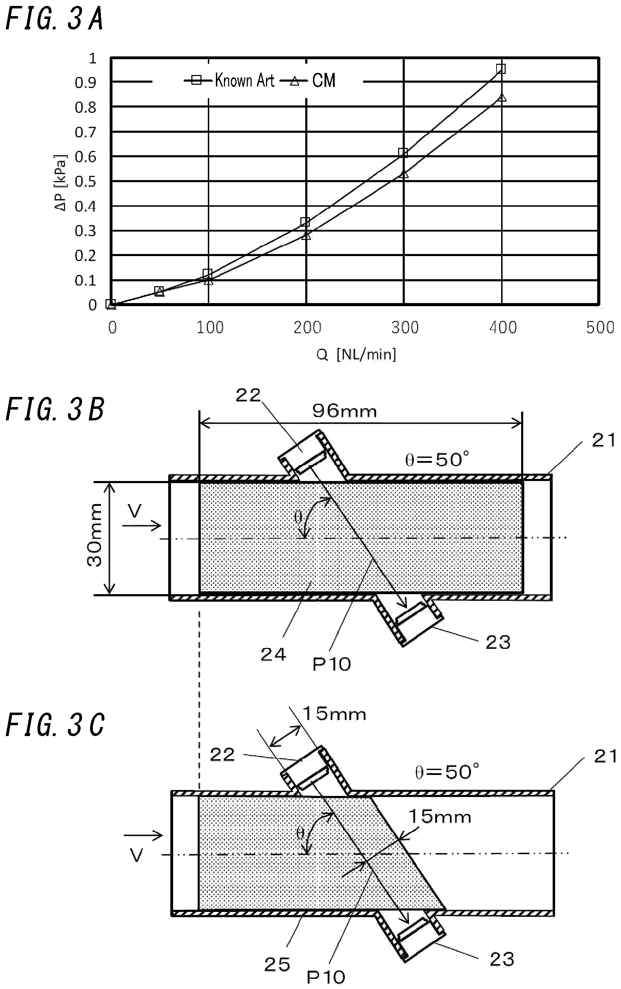

FIG. 3A is a graph showing how the relationship between the flow rate (Q) and the pressure drop (ΔP) changes according to the shape of the partition plate. The data shown in FIG. 3A was collected by carrying out experiments. FIGS. 3B and 3C are cross-sectional views schematically illustrating two measuring flow channels which were used in the experiments. Specifically, the flow channel 21 has a rectangular cross section, of which the longer sides have a width of 30 mm, and the shorter sides have a height of 9.3 mm. The internal space of the flow channel 21 is evenly divided by five partition plates to form divided flow channels in six layers. A pair of ultrasonic transducers 22, 23 are arranged on the two shorter sides, respectively, to face each other. A propagation path P10 is arranged to form an angle of 50 degrees with respect to the flow.

In FIG. 3A, the data labeled "known art" is collected from the structure shown in FIG. 3B in which the partition plate 24 has a rectangular shape. On the other hand, the data labeled "CM" is collected from the structure shown in FIG. 3C in which a downstream end of the partition plate is cut off to be parallel to the propagation path P10 and to be located downstream of the propagation path P10 by the width (corresponding to r in this example) of the ultrasonic transducer. Compare these two sets of data with each other, and it can be seen that "CM" causes less pressure drop than the "known art."

That is to say, according to "CM," the partition plate has a smaller area than in the known art, thus enabling having measurement done while reducing the pressure drop.

Also, in a situation where the flow rate of a fluid with moisture is measured, the water in a gas flow may produce condensation on the partition plate 2 to affect the accuracy of measurement (e.g., cause an increase in the pressure drop) in some cases. Even in such a situation, using a partition plate having a smaller area than the known rectangular partition plate may also reduce the likelihood of producing the condensation.

As can be seen, the pressure drop may be reduced by shortening the length of the partition plate located downstream of the centerline of the downstream ultrasonic wave propagation path 8b. In addition, the decrease in the surface area of the partition plate 2 enables reducing the likelihood of producing condensation.

The data shown in the graph of FIG. 3A was collected from a so-called "Z-shaped" structure in which a pair of ultrasonic transducers are arranged on two opposing shorter sides, respectively, (i.e., in which only one ultrasonic wave propagation path with no upstream or downstream propagation path is provided). Thus, the same advantages as the ones achieved by the V-ultrasonic wave propagation path shown in FIG. 1 would be naturally achieved by regarding the propagation path as the downstream ultrasonic wave propagation path and by shortening the length of the partition plate located downstream of the downstream ultrasonic wave propagation path.

As can be seen from the foregoing description, an ultrasonic flowmeter (1000) according to a first aspect includes a measuring flow channel (1), a partition plate (2), a pair of ultrasonic transducers (5, 6), a measuring circuit (11), and an arithmetic circuit (12). The measuring flow channel (1) has a rectangular cross section to allow a fluid under measurement to flow therethrough. The partition plate (2) is arranged to divide the measuring flow channel (1) along shorter sides thereof into multiple sections. The pair of ultrasonic transducers (5, 6) are arranged on one of the shorter sides of the measuring flow channel (1) to cause an ultrasonic wave to propagate across the measuring flow channel (1). The measuring circuit (11) performs an operation of having the ultrasonic wave transmitted from one of the pair of ultrasonic transducers (5, 6) and received at the other of the pair of ultrasonic transducers (5, 6). The arithmetic circuit (12) performs arithmetic processing on signals received at the pair of ultrasonic transducers (5, 6). A downstream end (10) of the partition plate (2) is arranged to be parallel to a downstream ultrasonic wave propagation path (8b) in a region downstream of a centerline of the downstream ultrasonic wave propagation path (8b).

This aspect may reduce the likelihood of causing a decline in the accuracy of measurement by shortening the length of the partition plate (2) and thereby reducing the likelihood of the flow being affected by drops of water formed on the partition plate (2). In addition, this may also reduce the pressure drop that would be caused to the fluid and may further reduce the likelihood of water droplet adhesion due to condensation by decreasing the surface area of the partition plate (2). Note that if something is "parallel to" something else, this phrase refers to not only a situation where these two things never intersect with each other in a strict sense of the word but also a situation where these two things are arranged side by side within a range with a certain difference.

In an ultrasonic flowmeter (1000) according to a second aspect, which may be implemented in conjunction with the first aspect, the downstream end (10) of the partition plate (2) is arranged to be parallel to the centerline of the downstream ultrasonic wave propagation path (8b) and to be located downstream of the centerline by at least one half of the width r of the ultrasonic transducers (5, 6).

According to this aspect, at the downstream end of the multiple layers, the partition plate is allowed to be present within a range where the propagation of the ultrasonic wave is not affected, thereby further reducing the pressure drop that would be caused to the fluid and minimizing the water droplet adhesion due to condensation by decreasing the surface area of the partition plate.

### Industrial Applicability

As can be seen from the foregoing description, an ultrasonic flowmeter according to the present disclosure enables reducing the pressure drop and the likelihood of a gas flow with moisture producing condensation by partially removing a downstream portion of the partition plate that forms a multilayer flow channel. Thus, the ultrasonic flowmeter according to the present disclosure is broadly applicable as a flowmeter for a flow with moisture, among other things.

### Reference Signs List

- 1: Measuring Flow Channel
- 2: Partition Plate
- 3: Upstream Inlet
- 4: Downstream Outlet
- 5, 6: Ultrasonic Transducer
- 7: Reflective Surface
- 8: Ultrasonic Wave Propagation Path
- 8a: Upstream Ultrasonic Wave Propagation Path
- 8b: Downstream Ultrasonic Wave Propagation Path
- 9: Upstream End
- 10: Downstream End
- 11: Measuring Circuit
- 12: Arithmetic Circuit
- 1000: Ultrasonic Flowmeter

## Claims

1. An ultrasonic flowmeter (1000) comprising:
a measuring flow channel (1) having a rectangular cross section and configured to allow a fluid under measurement to flow therethrough;
a partition plate (2) arranged to divide the measuring flow channel (1) along shorter sides thereof into multiple sections;
a pair of ultrasonic transducers (5, 6) arranged on one of the shorter sides of the measuring flow channel (1) to cause an ultrasonic wave to propagate across the measuring flow channel (1);
a measuring circuit (11) configured to perform an operation of having the ultrasonic wave transmitted from one of the pair of ultrasonic transducers and received at the other of the pair of ultrasonic transducers (5, 6); and
an arithmetic circuit (12) configured to perform arithmetic processing on signals received at the pair of ultrasonic transducers (5, 6), the ultrasonic flowmeter being **characterised by**
a downstream end (10) of the partition plate (2) being arranged to be parallel to a downstream ultrasonic wave propagation path (8b) in a region downstream of a centerline of the downstream ultrasonic wave propagation path (8b).

2. The ultrasonic flowmeter (1000) of claim 1, wherein
the downstream end (10) of the partition plate (2) is arranged to be parallel to the centerline of the downstream ultrasonic wave propagation path (8b) and to be located downstream of the centerline by at least one half of a width r of the ultrasonic transducers (5, 6).

## Patentansprüche

1. Ultraschall-Durchflussmesser (1000) mit:
einem Messdurchflusskanal (1) mit rechteckigem Querschnitt, der so konfiguriert ist, dass er es ermöglicht, dass eine zu messende Flüssigkeit hindurchfließt;
eine Trennwand (2), die so angeordnet ist, dass der Messdurchflusskanal (1) entlang seiner kürzeren Seiten in mehrere Abschnitte unterteilt wird;
ein Paar Ultraschallwandler (5, 6), die an einer der kürzeren Seiten des Messdurchflusskanals (1) angeordnet sind, um eine Ultraschallwelle zu erzeugen, die sich über den Messdurchflusskanal (1) ausbreitet;
ein Messkreis (11), der so konfiguriert ist, dass er einen Vorgang durchführt, bei dem die Ultraschallwelle von einem aus dem Paar der Ultraschallwandler übertragen und am anderen aus dem Paar der Ultraschallwandler (5, 6) empfangen wird; und
eine arithmetische Schaltung (12), die so konfiguriert ist, dass sie arithmetische Verarbeitungsvorgänge an dem von dem Ultraschallwandler-Paar (5, 6) empfangenen Signal durchführt;
wobei der Ultraschall-Durchflussmesser **dadurch gekennzeichnet ist, dass**
ein stromabwärtiges Ende (10) der Trennplatte (2) parallel zu einem stromabwärtigen Ultraschallwellen-Ausbreitungspfads (8b) angeordnet ist, in einem Bereich stromabwärts einer Mittellinie des Ultraschallwellen-Ausbreitungspfads (8b).

2. Ultraschall-Durchflussmesser (1000) nach Anspruch 1, wobei
das stromabwärtiges Ende (10) der Trennplatte (2) parallel zur Mittellinie des stromabwärts gelegenen Ultraschallwellen-Ausbreitungsweges (8b) angeordnet ist und sich stromabwärts der Mittellinie in einem Abstand von mindestens der Hälfte der Breite r der Ultraschallwandler (5, 6) befindet.

## Revendications

1. Débitmètre à ultrasons (1000) comprenant :
un canal d'écoulement de mesure (1) ayant une section transversale rectangulaire et conçu pour permettre à un fluide en cours de mesure de traverser celui-ci,
une plaque de séparation (2) agencée pour diviser le canal d'écoulement de mesure (1) le long de ses côtés les plus courts en plusieurs sections,
une paire de capteurs ultrasonores (5, 6) agencés sur un des côtés les plus courts du canal d'écoulement de mesure (1) pour propager une onde ultrasonore à travers le canal d'écoulement de mesure (1),
un circuit de mesure (11) conçu pour réaliser une opération consistant à faire transmettre l'onde ultrasonore par un capteur de la paire de capteurs ultrasonores et à la faire recevoir par l'autre capteur de la paire de capteurs ultrasonores (5, 6), et
un circuit arithmétique (12) conçu pour réaliser un traitement arithmétique sur les signaux reçus par la paire de capteurs ultrasonores (5, 6) ; le débitmètre à ultrasons étant **caractérisé par**
une extrémité aval (10) de la plaque de séparation (2) agencée pour être parallèle à un trajet de propagation aval des ondes ultrasonores (8b) dans une région en aval d'une ligne centrale du trajet de propagation aval des ondes ultrasonores (8b).

2. Débitmètre à ultrasons (1000) selon la revendication 1, dans lequel
l'extrémité aval (10) de la plaque de séparation (2) est agencée pour être parallèle à la ligne centrale du trajet de propagation aval des ondes ultrasonores (8b) et pour être située en aval de la ligne centrale, d'au moins la moitié d'une largeur r des capteurs ultrasonores (5, 6).
